# FASCICULE DE BREVET EUROPEEN

(11) **EP 3 112 228 B1**
(45) Date de publication et mention de la délivrance du brevet: **04.09.2019**
(21) Numéro de dépôt: 16176467.5
(22) Date de dépôt: 27.06.2016
(51) Int. Cl.: B60S 1/40, B60S 1/38

(54) **ORGANE POUR UN SYSTÈME DE CONNEXION D'UN BALAI D'ESSUYAGE À UN BRAS D'ESSUIE-GLACE**
ORGAN FÜR EIN VERBINDUNGSSYSTEM EINES WISCHERBLATTS AN EINEN SCHEIBENWISCHERARM
MEMBER FOR A SYSTEM FOR CONNECTING A BLADE TO A WIPER ARM

(30) Priorité: 29.06.2015 FR 1556019
(43) Date de publication de la demande: 04.01.2017
(73) Titulaire: Valeo Systèmes d'Essuyage, 78322 Le Mesnil Saint Denis (FR)
(72) Inventeur: HANINO, Marie-Therese, 63270 Parent (FR); ESPINASSE, Philippe, 63114 COUDES (FR)
(74) Mandataire: Vincent, Catherine Marie Marguerite

(56) Documents cités:
- EP-A1- 2 692 598
- DE-A1- 10 343 571
- DE-A1-102004 056 835
- FR-A1- 2 994 146
- US-A- 3 928 887

## Description

### DOMAINE TECHNIQUE

La présente invention concerne notamment un organe pour un système de connexion d'un balai à un bras d'essuie-glace, en particulier d'un véhicule automobile.

### ETAT DE L'ART

Le document US 3 928 887 A décrit un organe selon le préambule de la revendication 1.

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée "*flat blade*" (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un connecteur et un adaptateur. Le connecteur est une pièce qui est solidarisée au balai et qui est en général fixée directement sur la lame racleuse ou sur la *flat blade,* alors que l'adaptateur est solidaire du bras. L'adaptateur est une pièce intermédiaire qui permet la liaison et la fixation du connecteur sur le bras d'entraînement. Il est en général configuré pour être engagé dans une tête ou pièce terminale en forme de chape et à section transversale en U du bras d'entraînement.

Le connecteur et l'adaptateur comprennent chacun des moyens d'articulation configurés pour coopérer avec des moyens complémentaires de l'autre organe, pour définir au moins un axe transversal de pivotement du connecteur vis-à-vis de l'adaptateur, qui est un axe de pivotement du balai vis-à-vis du bras. Dans la technique actuelle, l'un des organes comprend en général un axe physique sensiblement cylindrique qui définit l'axe d'articulation et qui est reçu dans un orifice de forme complémentaire de l'autre organe.

On a constaté que le connecteur pouvait être fragilisé par la présence de cet orifice. En effet, cet orifice peut traverser une partie du connecteur et être délimité par au moins une paroi fine qui est relativement fragile. Les efforts d'essuyage ont tendance à engendrer des contraintes importantes sur cette paroi et il y a un risque non négligeable de casse de cette paroi en utilisation.

L'invention propose une solution simple, efficace et économique à ce problème, qui concerne un organe de système de connexion, et peut indifféremment s'appliquer à un connecteur ou à un adaptateur comportant un orifice du type précité.

### EXPOSE DE L'INVENTION

L'invention propose à cet effet un organe, dit premier organe, pour un système de connexion d'un balai d'essuyage à un bras d'essuie-glace, comprenant des moyens d'articulation autour d'un axe de pivotement et configurés pour coopérer avec des moyens complémentaires d'un second organe du système de connexion, caractérisé en ce que les moyens d'articulation comprennent au moins un orifice comprenant au moins deux portions de cylindre de rayons constants et différents, chaque cylindre formant un palier de rotation.

Le rayon considéré est constant dès lors que sa valeur mesurée selon une direction perpendiculaire à l'axe pivotement Y est identique en se déplaçant le long de cet axe de pivotement Y. Le rayon de chaque cylindre est considéré comme différent si un épaulement est visible entre les deux portions considérées. Ledit orifice traverse un flanc dudit organe, ledit flanc étant configuré pour être reçu dans un logement dudit second organe et comprenant des encoches latérales qui débouchent dans ledit orifice ou sont situés au voisinage immédiat de cet orifice.

L'organe selon l'invention peut comprendre une ou plusieurs des caractéristiques suivantes, prises isolément ou en combinaison les unes avec les autres :
- l'organe visé ici est un connecteur agencé pour être solidarisé sans degré de liberté sur une structure d'un balai d'essuyage de type plat,
- au moins deux portions sont coaxiales,
- les moyens d'articulation définissent un axe de rotation entre le balai d'essuyage et le bras d'essuie-glace, l'axe de rotation étant par ailleurs confondu avec l'axe de pivotement entre le premier organe formant par exemple connecteur et le deuxième organe formant par exemple adaptateur,
- les deux portions sont immédiatement adjacentes,
- ledit orifice comporte au moins trois portions, adjacentes au moins deux à deux et par exemple toutes les trois adjacentes, et présentant au moins deux rayons différents,
- l'orifice comprend la première portion de premier rayon, une troisième portion de troisième rayon, et une deuxième portion de deuxième rayon, le deuxième rayon étant inférieur l'un des premier et/ou troisième, la deuxième portion étant située entre lesdites première et troisième portions,
- la première portion et la troisième portion présentent un rayon identique,
- la première portion et la troisième portions sont des portions latérales dudit orifice et la deuxième portion est une portion médiane dudit orifice,
- les première et troisième portions représentent des portions d'extrémité dudit orifice selon l'axe de pivotement,
- chacune desdites première et troisième portions a une épaisseur mesurée selon l'axe de pivotement représentant 5 à 25% de celle dudit orifice,
- la deuxième portion a une épaisseur mesurée selon l'axe de pivotement représentant 50 à 90% de celle dudit orifice,
- le rapport du deuxième rayon sur le premier et/ou troisième rayon est compris entre 0,6 et 0,9,
- lesdites première et troisième portions sont configurées pour recevoir, de préférence par encliquetage élastique, lesdits moyens complémentaires du second organe,
- chacune desdites première, seconde et troisième portions a une surface cylindrique fermée,
- au moins une desdites première et troisième portions est reliée à ladite deuxième portion par une surface annulaire sensiblement radiale par rapport à l'axe de pivotement,
- au moins une desdites première et troisième portions forme un premier palier de rotation configuré pour recevoir lesdits moyens complémentaires du second organe,
- la deuxième des portions forme un deuxième palier de rotation configuré pour recevoir une broche d'une pièce terminale d'un bras, ladite broche s'étendant selon l'axe de pivotement,
- lesdites encoches sont symétriques par rapport à un premier plan médian perpendiculaire à l'axe de pivotement, et dans lequel un second plan perpendiculaire audit premier plan passe sensiblement par l'axe de pivotement et au milieu desdites encoches.

L'invention vise aussi un système de connexion d'un balai d'essuyage à un bras d'essuie-glace, ce système comportant deux organes dont l'un, dit premier organe, est configuré pour être solidarisé audit balai d'essuyage et l'autre, dit second organe, est configuré pour être solidarisé audit bras d'essuie-glace, caractérisé en ce que le premier des organes est tel que défini ci-dessus.

Dans un tel cas, le premier organe est un connecteur configuré être solidarisé audit balai d'essuyage.

L'invention couvre encore un balai d'essuyage, caractérisé en ce qu'il comprend ou porte un premier organe tel que présenté ci-dessus ou un système tel qu'évoqué précédemment.

L'organe selon l'invention permet de remédier au problème de la technique antérieure de rupture de l'organe. En effet, les portions de différents diamètres peuvent être conçues pour limiter l'affaiblissement de la partie de l'organe comportant l'orifice. Ils offrent en outre plusieurs possibilités pour le guidage et le centrage lors de l'articulation du balai vis-à-vis du bras.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un essuie-glace, cet essuie-glace comportant un balai d'essuie-glace et un bras d'entraînement du balai, qui sont reliés l'un à l'autre par un système de connexion,
- la figure 2 est une vue schématique en perspective d'un balai d'essuie-glace équipé d'un système de connexion selon l'invention,
- les figures 3 et 4 sont des vues schématiques en perspective d'un connecteur du système de connexion de la figure 2,
- les figures 5 et 6 sont des vues schématiques en perspective de l'adaptateur du système de connexion de la figure 2,
- les figures 7 et 8 sont des vues schématiques en perspective et en coupe du système de connexion de la figure 2,
- la figure 9 est une vue schématique en perspective d'une variante de réalisation d'un connecteur d'organe de connexion, et
- les figures 10 à 16 sont des vues schématiques en perspective du balai d'essuie-glace de la figure 2 et de différents bras d'entraînement reliés au balai par le système de connexion.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement selon l'invention. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations extérieure (ou arrière) ou intérieure (ou avant) s'apprécient par rapport au point de fixation du balai sur le bras, la dénomination intérieure correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du balai d'essuie-glace, la dénomination inférieure contenant le plan du pare-brise.

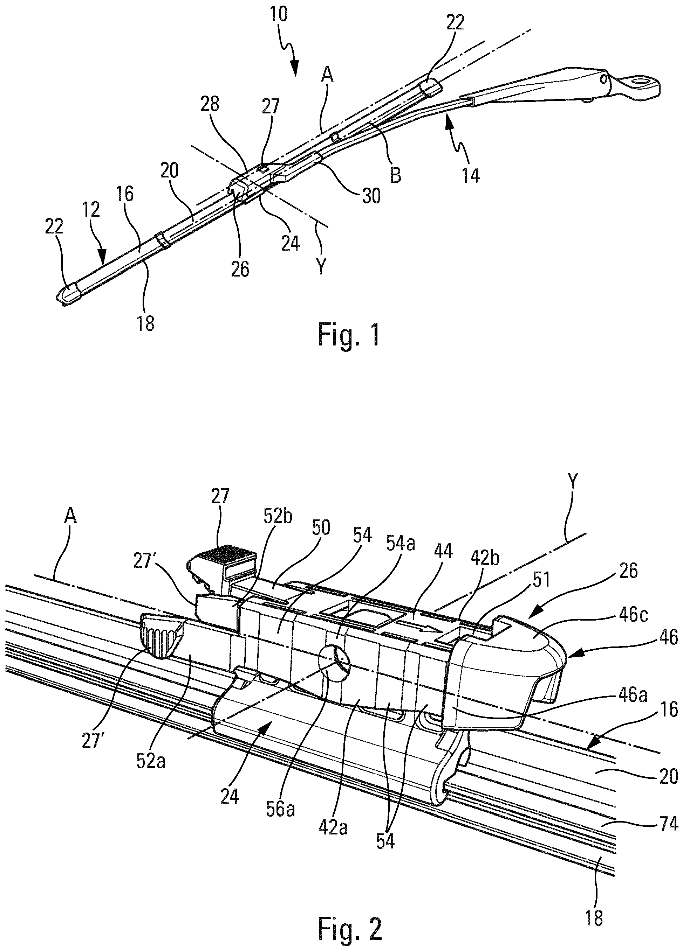

Il est illustré à la figure 1 un essuie-glace 10 comportant notamment un balai d'essuyage 12 et un bras 14 d'entraînement du balai d'essuyage 12.

Le balai d'essuyage 12 est de préférence du type flat blade et comprend un corps longitudinal 16, une lame d'essuyage 18, en général en caoutchouc, et au moins une vertèbre (non visible) qui rigidifie la lame et favorise son application sur un pare-brise de véhicule.

Le corps 16 du balai d'essuyage 12 peut comporter un déflecteur aérodynamique supérieur 20 destiné à améliorer le fonctionnement du système d'essuyage, le but de ce déflecteur étant d'améliorer le plaquage du balai d'essuyage sur le pare-brise et donc la performance aérodynamique de l'essuie-glace.

Le balai d'essuyage 12 peut comprendre en outre des embouts d'extrémité 22 ou agrafes d'accrochage de la lame 18 et de la vertèbre sur le corps 16, ces embouts 22 étant situés à chacune des extrémités longitudinales du corps 16.

Le balai d'essuyage 12 comprend sensiblement en son milieu un connecteur 24 intermédiaire, autrement appelé premier organe. Un adaptateur 26, autrement appelé second organe, solidaire du bras d'essuie-glace 14 est monté sur le connecteur 24 de façon à garder un degré de liberté en rotation autour d'un axe de pivotement Y qui est un axe transversal sensiblement perpendiculaire à l'axe longitudinal du balai d'essuyage 12. Ce degré de liberté autorise un pivotement du balai d'essuyage 12 vis-à-vis du bras d'essuie-glace 14 et permet ainsi au balai d'essuyage de suivre la courbure du pare-brise lors de ses déplacements. L'adaptateur 26 peut être désolidarisé du bras d'essuie-glace 14 par appui sur un bouton d'actionnement, ici un bouton poussoir 27, porté par l'adaptateur.

Le bras d'essuie-glace 14 est destiné à être entraîné par un moteur pour suivre un mouvement angulaire de va-et-vient permettant d'évacuer l'eau et éventuellement d'autres éléments indésirables recouvrant le pare-brise. L'adaptateur 26 assure la liaison du balai d'essuyage 12 au bras d'essuie-glace 14 et en particulier à une tête ou pièce terminale 28 du bras d'essuie-glace qui peut être formée d'une seule pièce avec le bras d'essuie-glace ou rapportée et fixée sur celui-ci.

Dans l'exemple représenté, la pièce terminale 28 du bras d'essuie-glace forme une chape à section transversale sensiblement en U.

La pièce terminale 28 a une forme allongée dont l'axe d'allongement A est en général sensiblement parallèle à l'axe d'allongement ou longitudinal du balai d'essuyage 12. La pièce terminale 28 comprend une partie 30 de liaison au reste du bras d'essuie-glace 14, par exemple par sertissage. Cette partie 30 a une forme générale allongée et s'étend le long d'un axe B sensiblement parallèle à l'axe A et à distance de cet axe, comme cela est visible à la figure 1. La partie 30 est reliée à une extrémité arrière ou intérieure de du reste de la pièce terminale 28.

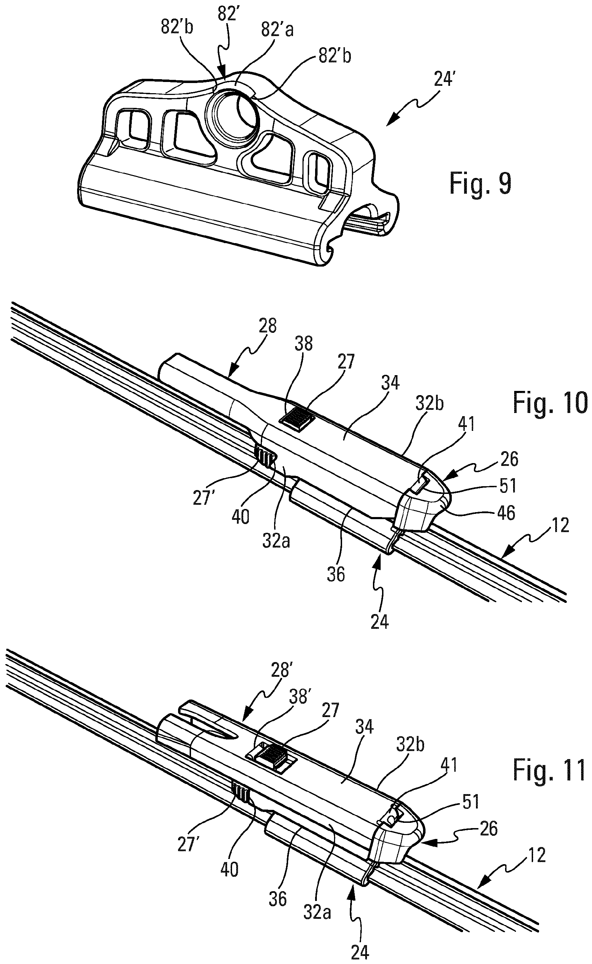

L'adaptateur 26 est du type « universel » et est destiné à être monté indifféremment sur des pièces terminales 28 de différents bras d'essuie-glace, voire sur des bras d'essuie-glace non équipés de pièces terminales, comme cela sera décrit plus en détail dans ce qui suit en référence aux figures 10 à 16.

Les figures 2 à 9 montrent un mode de réalisation de l'adaptateur 26 ainsi que du connecteur 24 destiné à coopérer avec cet adaptateur, l'adaptateur et le connecteur formant ensemble un système de connexion du balai d'essuyage 12 au bras d'essuie-glace 14 ou à un bras d'essuie-glace 14 parmi plusieurs types de bras d'essuie-glace différents.

L'adaptateur 24 a une forme générale allongée le long de l'axe A. Il comprend un corps comportant deux parois latérales 42a, 42b sensiblement parallèles entre elles et à l'axe A, et à distance l'une de l'autre. Ces parois 42a, 42b sont reliées entre elles à leurs extrémités supérieures par une paroi transversale supérieure 44 sensiblement perpendiculaire aux parois 42a, 42b. Les parois 42a, 42b, 44 ont ici une forme allongée en direction longitudinale.

Les parois 42a, 42b, 44 de l'adaptateur 26 définissent entre elles un espace longitudinal, autrement appelé logement 45, dans lequel est destinée à être montée une partie du connecteur 24, en particulier un flanc 76. Les parois 42a, 42b sont ici du type à double peau et comportent chacune deux peaux, respectivement interne et externe, parallèles et à distance transversale l'une de l'autre. Les peaux sont reliées ensemble par des nervures rectilignes transversales.

Le corps de l'adaptateur 26 est relié à une première de ses extrémités longitudinales à un carénage ou capotage, aussi appelé casquette ou tête 46. Cette tête 46 a une dimension latérale supérieure à celle du corps de l'adaptateur et une hauteur également supérieure à celle du corps. Les parois latérales 42a, 42b du corps de l'adaptateur sont ainsi en retrait ou décalées par rapport à des faces latérales externes 46a de la tête, et sa paroi supérieure 44 est en retrait ou décalée par rapport à une face supérieure externe 46b de la tête.

Les faces latérales 46a de la tête 46 sont reliées aux parois latérales 42a, 42b du corps par des faces arrière latérales 48a, respectivement, qui s'étendent sensiblement perpendiculairement à l'axe A. La face supérieure 46c de la casquette 46 est reliée à la paroi supérieure 44 du corps par une autre face arrière supérieure 48b qui s'étend également sensiblement perpendiculairement à l'axe A.

Les faces arrière 48a, 48b de la tête 46 forment des faces d'appui de l'extrémité extérieure ou avant de la pièce terminale 28. Plus précisément, en position montée de l'adaptateur dans la pièce terminale 28, les bords libres avant des jambes latérales de la pièce terminale sont destinés à venir en appui sur les faces 48a, et le bord libre avant de la paroi transversale de la pièce terminale est destiné à venir en appui sur la face 48b.

La paroi supérieure 44 du corps de l'adaptateur 26 comprend, sensiblement en son milieu, une fenêtre 49. La paroi supérieure 44 comprend à son extrémité longitudinale opposée à la tête 46 des fentes longitudinales parallèles entre elles et à l'axe A et espacées les unes des autres, de façon à définir entre elles au moins une portion d'une languette longitudinale 50.

La languette 50 s'étend longitudinalement du côté opposé à la tête 46, dans le prolongement de la paroi supérieure 44. Elle est élastiquement déformable et est reliée à son extrémité libre extérieure ou avant au bouton poussoir supérieur 27 précité, qui est en saillie sur la languette 50. A l'état libre sans contrainte, chaque languette 50 est telle que le bouton poussoir 27 est situé au-dessus d'un plan passant par la paroi supérieure 44. Les déformations élastiques des languettes ont ici lieu dans un plan longitudinal médian sensiblement vertical, c'est-à-dire sensiblement perpendiculaire à la paroi supérieure 44. L'adaptateur 26 est ainsi équipé d'un bouton poussoir supérieur 27.

Lors du montage de l'adaptateur 26 dans la pièce terminale 28, le bouton poussoir 27 est destiné à s'engager par encliquetage élastique dans l'ouverture 38 pour verrouiller l'adaptateur vis-à-vis de la pièce terminale.

L'adaptateur 26 comprend en outre un orifice supérieur 51 d'engagement d'une patte d'une pièce terminale de bras d'essuie-glace. Cet orifice 51 est ici formé en partie dans la tête 46, à l'extrémité arrière de celle-ci, et en partie dans la paroi supérieure 44, à l'extrémité avant de celle-ci. L'orifice 51 a une forme générale carrée ou rectangulaire.

Les parois latérales 42a, 42b du corps se prolongent vers l'intérieur par des pattes longitudinales 52a, 52b élastiquement déformables. Chaque paroi 42a, 42b est reliée à une patte 52a, 52b, ces pattes 52a, 52b étant sensiblement parallèles et symétriques par rapport à un plan longitudinal médian, sensiblement vertical, c'est-à-dire perpendiculaire à la paroi supérieure 44 de l'adaptateur. Les extrémités libres des pattes 52a, 52b, qui sont situées du côté opposé à la tête 46, portent chacune un bouton poussoir latéral 27' en saillie. Chaque patte 52a, 52b porte ainsi un bouton poussoir 27". Les déformations élastiques des pattes 52a, 52b ont ici lieu dans un plan longitudinal sensiblement horizontal, c'est-à-dire sensiblement parallèle à la paroi supérieure 44. Les pattes 52a, 52b peuvent être rapprochées l'une de l'autre par déformation élastique. Les boutons poussoirs 27" sont conformés pour coopérer avec des encoches de la pièce terminale 28, comme cela sera décrit plus en détail dans ce qui suit.

Les parois latérales 42a, 42b comprennent chacune un orifice 56 traversant. Les orifices 56 des parois 42a, 42b sont sensiblement coaxiaux et définissent ici l'axe Y de pivotement de l'adaptateur 24 sur le connecteur 24, et donc du balai d'essuyage vis-à-vis du bras d'essuie-glace. Les orifices 56 sont ici à section circulaire et comprennent chacun une surface interne 56a sensiblement cylindrique. Les orifices 56 débouchent à leurs extrémités latérales externes sur les faces externes des parois 42a, 42b, respectivement, et à leurs extrémités latérales internes dans le logement 45.

Les faces latérales internes en regard des parois latérales 42a, 42b comprennent des protubérances 60. Chaque paroi latérale 42a, 42b comprend une protubérance 60, les protubérances étant ici en regard l'une de l'autre et s'étendant sensiblement l'une vers l'autre. Les protubérances 60 sont symétriques par rapport à un plan longitudinal médian de l'adaptateur, perpendiculaire à la paroi supérieure 44. Chaque protubérance 60 présente également un plan de symétrie passant par l'axe Y et perpendiculaire à l'axe A.

Chaque protubérance 60 est trouée et comprend un trou traversant. Ce trou est ici formé par un des orifices 56 précités. Chaque protubérance 60 est ainsi située sur la face interne de la paroi latérale 42a ou 42b de sorte à être traversée par l'orifice 56 de cette paroi.

Chaque protubérance 60 a une forme générale cylindrique et ici tubulaire du fait de l'orifice 56 qui la traverse. L'axe de chaque orifice 56, qui est confondu avec l'axe de pivotement Y, est également confondu avec l'axe de la protubérance cylindrique 60 correspondante, si bien que l'orifice est centré vis-à-vis de la protubérance. Chaque protubérance 60 forme ainsi un bourrelet annulaire de matière autour de l'orifice 56, ayant sensiblement une épaisseur radiale par rapport à l'axe de pivotement Y sensiblement constante. Chaque protubérance 60 a une dimension axiale le long de l'axe de pivotement Y qui représente environ 10 à 20% de la dimension axiale ou largeur du logement le long de l'axe de pivotement Y. Chaque protubérance 60 a un diamètre externe qui représente environ 60 à 80% de la hauteur de la paroi latérale 42a, 42b correspondante, mesurée dans une direction sensiblement verticale perpendiculaire à la paroi supérieure 44.

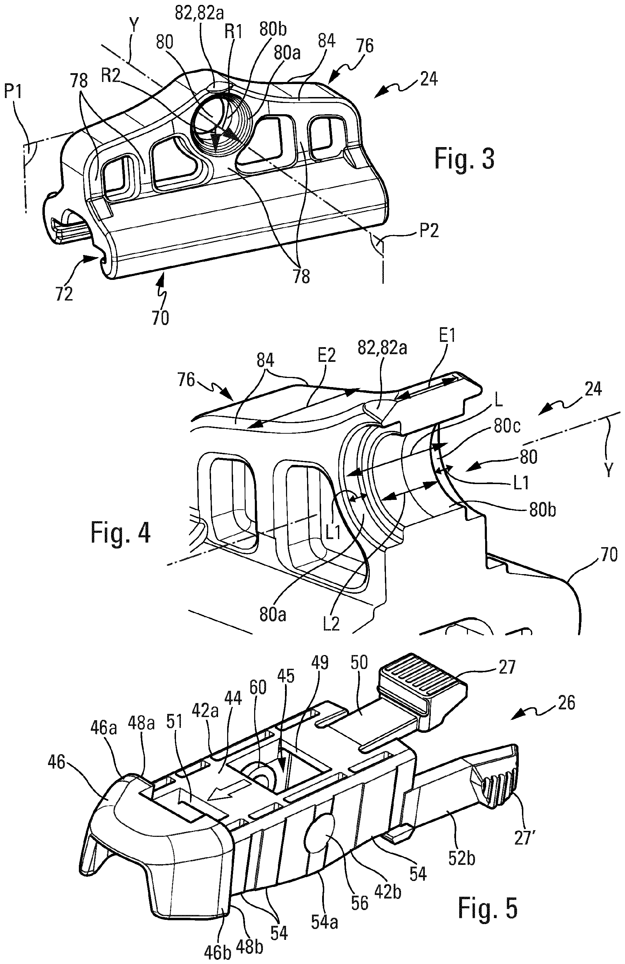

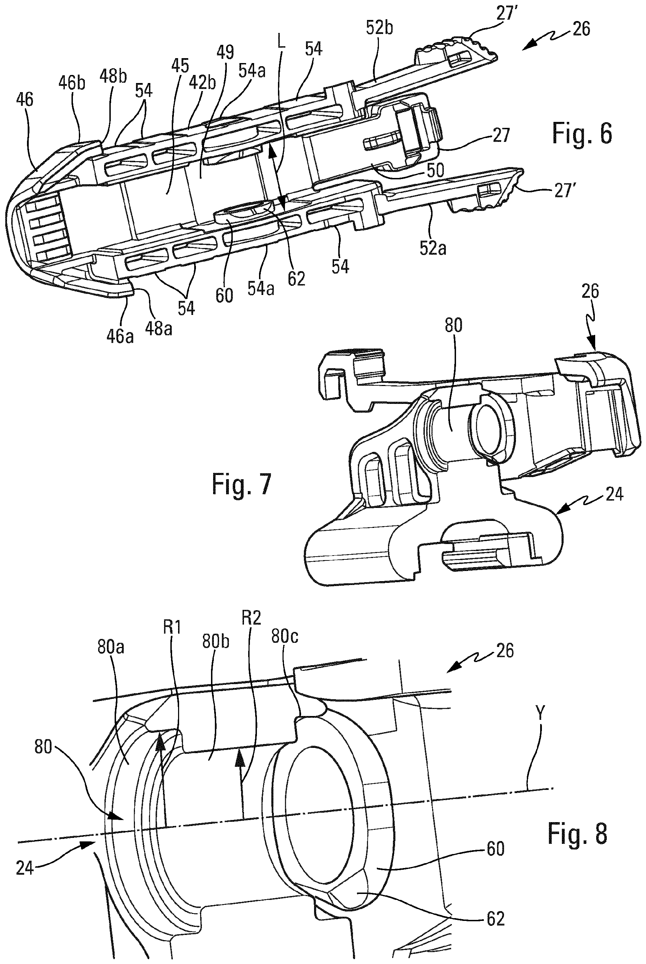

Comme cela est visible aux figures 5 et 6, chaque protubérance 60 comprend une partie, ici inférieure, tronquée ou chanfreinée. Chaque partie tronquée ou chanfreinée définit une rampe 62 qui s'étend dans un plan incliné par rapport aux parois latérales 42a, 42b. Chaque rampe 62 définit au moins une surface de glissement, et ici deux, destinées à coopérer avec le connecteur 24. Les rampes 62 des protubérances 60 sont inclinées de sorte qu'elles s'éloignent l'une de l'autre du haut vers le bas. Leurs extrémité inférieures, situées du côté opposé à la paroi supérieure 44, sont espacées l'une de l'autre d'une distance L le long de l'axe de pivotement Y (figure 6). L'extrémité inférieure de chaque rampe 60 s'étend à faible distance, le long de l'axe de pivotement Y, de la face interne de la paroi latérale 42a, 42b correspondante et peut être directement reliée à cette face interne. Dans ce dernier cas, la distance L est sensiblement égale à la distance entre les faces internes des parois 42a, 42b ou à la largeur du logement 45. Chaque rampe 62 s'étend sur une circonférence autour de l'axe de pivotement Y, représentant un angle compris entre 30 et 150°, et de préférence entre 90 et 120°.

Les parois latérales 42a, 42b du corps de l'adaptateur 26 comprennent en outre sur leurs faces latérales externes des moyens 54, 54a en saillie qui définissent des faces d'appui en direction transversale. Au moins certains 54a de ces moyens en saillie sont situés au niveau des orifices 56, et sont traversés par ces orifices dans l'exemple représenté.

Les moyens en saillie comprennent ici des bandes de matière 54, 54a en saillie sur les faces latérales externes des parois latérales 42a, 42b. Les bandes de matière ont une forme allongée et s'étendent longitudinalement entre les bords longitudinaux inférieurs et supérieurs des parois 42a, 42b.

Les bandes de matière 54, 54a définissent des faces d'appui sensiblement parallèles. Ces faces d'appui sont ici sensiblement parallèles aux faces latérales externes des parois 42a, 42b ainsi qu'à l'axe longitudinal de l'adaptateur 26.

Les bandes de matière 54, 54a sont espacées en direction longitudinale les unes des autres et réparties sur les parois latérales 42a, 42b dans la même direction. Dans l'exemple représenté, chaque paroi latérale comprend quatre desdites bandes de matière 54, 54a. Les bandes de matière de l'une des parois latérales sont symétriques par rapport aux bandes de matière de l'autre des parois latérales, par rapport à un plan longitudinal médian de l'adaptateur sensiblement perpendiculaire à sa paroi supérieure 44.

Les bandes de matière 54, 54a ont sensiblement toutes la même épaisseur ou dimension en direction transversale. Les bandes de matière 54a traversées par les orifices 56 ont une largeur ou dimension en direction longitudinale inférieure à celle des autres bandes de matière 54, et également inférieure au diamètre desdits orifices 56.

Le plan transversal médian perpendiculaire à la paroi supérieure 44 de l'adaptateur 26 et passant par l'axe de pivotement Y traverse les bandes de matière 54a sensiblement en leur milieu et est un plan de symétrie de ces bandes. Autrement dit, les bandes de matière 54a sont sensiblement centrées sur l'axe de pivotement Y et les orifices 56.

L'adaptateur 26 décrit ci-dessus est avantageusement unitaire, c'est-à-dire constitué par une même matière synthétique. Il peut ainsi être fabriqué au cours d'une unique opération de moulage, notamment par injection.

L'adaptateur 26 est fixé au connecteur 24 grâce aux protubérances 60 qui forment des moyens de fixation de l'adaptateur au connecteur et qui peuvent en outre former des moyens de pivotement de l'adaptateur vis-à-vis du connecteur. Les moyens de fixation sont du type à encliquetage élastique, les protubérances 60 de l'adaptateur 26 étant destinées à coopérer par encliquetage élastique avec des moyens complémentaires du connecteur 24.

Le connecteur 24, mieux visible aux figures 3 et 4, est agencé pour être rendu solidaire, par exemple par sertissage, du balai d'essuyage 12. Le connecteur 24 assure une liaison mécanique dite complète avec le balai d'essuyage 12, en ce sens qu'il n'existe pas de degré de liberté. Le connecteur 24 peut également assurer une fonction de transport et de distribution d'un liquide de lavage du pare-brise du véhicule.

Le connecteur 24 comprend une embase 70 qui s'étend longitudinalement et transversalement. Cette embase 70 comprend une zone de solidarisation 72 sur le balai d'essuyage 12, et plus particulièrement sur au moins une vertèbre 74 de ce balai d'essuyage. Cette zone de solidarisation 72 prend par exemple la forme d'une saignée ménagée dans l'embase 70, cette saignée étant bordée par deux crochets aptes à venir en prise sur le balai d'essuyage.

Dans l'exemple représenté, le balai d'essuyage 12 comprend deux vertèbres 74 parallèles et coplanaires qui sont espacées l'une de l'autre pour définir un espace de logement de la lame d'essuyage 18 ou du corps 16 du balai d'essuyage. Chaque vertèbre comprend un bord longitudinal, opposé à la lame 18, qui est reçu dans la saignée du connecteur 24.

L'embase 70 est surmontée d'un flanc 76, par exemple, issu de matière avec l'embase. Ce flanc 76 présente une dimension transversale inférieure à celle de l'embase et une dimension longitudinale sensiblement égale à celle de l'embase. Le flanc 76 est par exemple centré sur l'embase 70, selon l'axe de pivotement Y. Le flanc 4 peut présenter une pluralité de nervures 78 qui assurent un renforcement mécanique du flanc.

Le connecteur 24 et l'adaptateur 26 sont reliés mécaniquement par une liaison pivot. En ce qui concerne le connecteur 24, cette liaison pivot est mise en oeuvre par un orifice 80 réalisé dans le flanc 76. Cet orifice 80 s'étend selon l'axe de pivotement Y. Il traverse le flanc 76. En d'autres termes, l'orifice 80 a un axe central centré sur l'axe de pivotement Y.

Dans l'exemple représenté, l'orifice 80 comprend des portions adjacentes 80a, 80b coaxiales et de rayons différents. Au moins une première et/ou troisième portion 80a, 80c forme un premier palier de rotation à l'égard du second organe 26. C'est ainsi qu'est opéré le pivotement de l'adaptateur sur le connecteur. On comprend que seul l'une de ces portions peut remplir la fonction de premier palier, mais l'invention couvre aussi le cas où la première portion 80a et la troisième portion 80c remplissent la fonction de palier pour le second organe 26.

L'orifice 80 peut comprendre trois portions distinctes : une première portion latérale 80a, une troisième portion latérale 80c, et une deuxième portion médiane 80b s'étendent entre la première portion 80a et la troisième portion 80c. Les portions latérales 80a et 80c ont un rayon R₁ qui est supérieur au rayon R₂ de la deuxième portion 80b.

On notera que le rayon R₁ de la première portion 80a peut être différent du rayon R₁ de la troisième portion. Ceci permet de faire un détrompeur pour assurer le montage dans le bon sens de l'adaptateur sur le connecteur, dès que l'adaptateur comprend des protubérances de rayons également différents.

Alternativement, le rayon R₁ de la première portion 80a peut être identique au rayon R₁ de la troisième portion.

Les rayons évoqués ici permettent de comprendre que la première portion et/ou la deuxième portion et/ou la troisième portion peuvent être des secteurs angulaires cylindriques. Bien entendu, ces secteurs angulaires peuvent être égaux à 360° de sorte que la première portion et/ou la deuxième portion et/ou la troisième portion sont des cylindres de révolution fermés.

La première portion 80a comprend une surface cylindrique terminée par une première extrémité, vu dans l'axe de pivotement Y, et qui débouche sur une face latérale du flanc 76. Cette première extrémité de la première portion 80a est reliée à cette face par un bord annulaire chanfreiné ou arrondi convexe. Cette surface cylindrique comprend une seconde extrémité, selon l'axe de pivotement Y, opposée à la première extrémité et qui est reliée par une surface annulaire sensiblement radiale, suivant l'axe de pivotement Y, à une première extrémité de la deuxième portion 80b, vu dans l'axe de pivotement Y.

De la même façon, la troisième portion 80c comprend une surface cylindrique terminée par une première extrémité, vu dans l'axe de pivotement Y, et qui débouche sur une face latérale du flanc 76. Cette première extrémité de la troisième portion 80c est reliée à cette face par un bord annulaire chanfreiné ou arrondi convexe. Cette surface cylindrique comprend une seconde extrémité, selon l'axe de pivotement Y, opposée à la première extrémité et qui est reliée par une surface annulaire sensiblement radiale, suivant l'axe de pivotement Y, à une seconde extrémité de la deuxième portion 80b, vu dans l'axe de pivotement Y. La seconde extrémité de la deuxième portion 80b est opposée à la sa première extrémité par rapport à sa surface cylindrique.

Chaque première et/ou troisième portion 80a, 80c a une épaisseur L1 représentant 5 à 25% de celle L de l'orifice 80. La portion médiane a une épaisseur L2 représentant 50 à 90% de celle L de l'orifice. Le rapport R₂/R₁ est par exemple compris entre 0,6 et 0,9. Les épaisseurs L, L1 et L2 évoquées ici sont mesurées le long de l'axe de pivotement Y.

On notera qu'au moins deux portions 80a, 80b sont coaxiales. Il peut par exemple s'agir de la première portion 80a coaxiale avec la deuxième portion 80b. Il peut également s'agir de la première portion 80a coaxiale avec la troisième portion 80c. Il peut également s'agir de la deuxième portion 80b coaxiale avec la troisième portion 80c. Enfin, les trois portions peuvent être coaxiales.

Les deux portions 80a, 80b sont immédiatement adjacentes. Il peut par exemple s'agir de la première portion 80a et/ou de la troisième portion 80c immédiatement adjacente à la deuxième portion 80b. Par immédiatement, on comprend que les portions sont côte-à-côte, sans l'interposition d'un autre élément.

Le connecteur 24 décrit ci-dessus est avantageusement unitaire, c'est-à-dire constitué par une même matière synthétique. Ce connecteur peut ainsi être fabriqué au cours d'une unique opération de moulage, notamment par injection.

L'adaptateur 26 est monté sur le connecteur 24 par encliquetage élastique de ses protubérances 60 dans l'orifice 80 du connecteur. Les rampes 62 des protubérances 60 de l'adaptateur 26 coopèrent avec le connecteur pour faciliter ce montage. De son côté, le connecteur comprend également des moyens facilitant une insertion des protubérances 60 de l'adaptateur 26 dans sa cavité 10.

Ces moyens sont ici aménagés sur le flanc 76 du connecteur 24. Il s'agit ici d'encoches 82 ménagées dans les faces latérales délimitant le flanc 76, et au droit de laquelle l'orifice 80 se termine. On comprend ici que chaque encoche 82 et l'orifice 80 sont au voisinage l'un avec l'autre, l'encoche 82 s'étendant ainsi depuis une arête 84 du flanc 76 sensiblement jusqu'au trou formant l'orifice 80. Au droit de chaque encoche 82, le flanc 76 présente une épaisseur E1 inférieure à une épaisseur E2 d'une portion du flanc 76 bordant ladite encoche 82. Ces épaisseurs E1, E2 sont mesurées selon une direction parallèle à l'axe de pivotement Y. Ainsi formée, cette encoche 82 est délimitée par deux surfaces de guidage 82a. Les surfaces de guidage 82a des encoches 82 sont sensiblement complémentaires de celles des rampes 62 des protubérances 60 de l'adaptateur 26.

Les encoches 82 sont symétriques par rapport à un premier plan médian P1 perpendiculaire à l'axe de pivotement Y. Un second plan P2 perpendiculaire audit premier plan passe sensiblement par l'axe de pivotement Y et au milieu des encoches.

L'assemblage de l'adaptateur 26 sur le connecteur 24 est réalisé uniquement par une translation verticale selon un axe perpendiculaire à la paroi supérieure 44 de l'adaptateur. Lors de cette translation, les protubérances 60 de l'adaptateur 26 s'engagent dans les encoches 82 du connecteur et coopèrent avec leurs surfaces 82a pour centrer l'adaptateur sur le connecteur. Les rampes 62 ont des surfaces de guidage qui coopèrent par glissement avec ces surfaces 82a. Pour cela, la distance L précitée est de préférence supérieure à l'épaisseur E1. Par ailleurs, la distance inter protubérances 60, mesurée le long de l'axe de pivotement Y, est inférieure à la largeur de l'orifice 80 ainsi que l'épaisseur E2.

Lors de l'insertion des protubérances 60 dans les encoches 82, les rampes 62 prennent appui sur les surfaces des encoches et la translation vers le bas de l'adaptateur est poursuivie de sorte que les parois latérales 42a, 42 de l'adaptateur soient contraintes de se déformer en s'écartant l'une de l'autre du fait du glissement des rampes sur les surfaces des encoches. Cette opération est poursuivie jusqu'à ce que les protubérances 60 s'engagent par encliquetage ou retour élastique dans l'orifice 80 du connecteur. L'adaptateur est alors fixé au connecteur et peut en outre pivoté sur lui autour de l'axe de pivotement Y, par coopération de ses protubérances avec les surfaces cylindriques des portions 80a de l'orifice 80 (figures 7 et 8). Les protubérances 60 peuvent avoir un rayon interne inférieur ou égal à celui R₂ de la deuxième portion 80b, et un rayon externe inférieur ou égal à celui R₁ des première et troisième portions 80a, 80c.

On obtient alors le montage représenté en figure 2.

La figure 9 montre une variante de réalisation du connecteur 24', qui diffère de celui décrit dans ce qui précède par la forme de ses encoches 82'.

Chaque encoche 82' est délimitée par un fond 82a' et par deux tranches 82b' qui relient le fond 82a' à la face latérale correspondant du flanc du connecteur. Les fonds 82a' des encoches 82 sont parallèles ou inclinés l'un par rapport à l'autre. Dans ce dernier cas, ils sont inclinés de sorte que leurs extrémités supérieures, situées du côté opposé à l'orifice 80, soient plus proches que ne le sont leurs extrémités inférieures. Avantageusement, les protubérances de l'adaptateur comprennent des chanfreins conformés de manière complémentaire aux encoches 82'.

L'adaptateur 26 est du type universel car il est apte à être fixé à plusieurs types de bras d'essuie-glace, que ce soit des bras d'essuie-glace à pièce terminale ou sans pièce terminale.

Les figures 10 à 16 montrent plusieurs types de bras d'essuie-glace pouvant être équipés de l'adaptateur 26.

On se réfère d'abord aux figures 10 et 11 qui représentent respectivement deux pièces terminales 28, 28' de bras d'entraînement différents.

Chaque pièce terminale 28, 28' comprend deux jambes latérales 32a, 32b dont les bords longitudinaux supérieurs sont reliés entre eux par une paroi transversale supérieure 34. Les jambes 32a, 32b et la paroi 34 délimitent entre elles un espace de logement de l'adaptateur 26. Les jambes 32a, 32b peuvent comprendre au niveau de leurs bords longitudinaux inférieurs des moyens 36, tels que des crochets, de retenue de l'adaptateur 26 dans l'espace précité.

La paroi supérieure 34 comprend une ouverture 38, 38' traversante destinée à recevoir le bouton poussoir supérieur 27. En position de montage, le bouton poussoir 27 est logé dans cette ouverture 38 et peut traverser cette dernière de façon à être en saillie sur la face supérieure de la paroi 34. Le montage du bouton poussoir 27 dans l'ouverture 38 se fait par simple engagement ou emboîtement, de préférence par encliquetage élastique.

Les parois latérales 32a, 32b peuvent comprendre chacune une encoche 40 de forme complémentaire d'un bouton poussoir latéral 27'. En position de montage, les boutons poussoirs latéraux 27' sont logés dans ces encoches 40 et peuvent les traverser de façon à être en saillie sur les faces externes des parois 32a, 32b. Le montage des boutons poussoirs 27" dans les encoches 40 se fait par simple engagement ou emboîtement, de préférence par encliquetage élastique.

Les pièces terminales 28, 28' sont différentes. Elles ont globalement la même forme mais diffèrent les unes des autres notamment par des dimensions et par la forme et la taille de leurs ouvertures 38, 38' ou encoches 40.

Les parois supérieures 34 des pièces terminales 28, 28' se prolongent vers l'extérieur pour former chacune une patte 41 à section longitudinale sensiblement en S, qui est configurée pour être engagée dans l'orifice 51 de l'adaptateur 26.

Les pièces terminales 28, 28' ont sensiblement la même largeur externe. Par ailleurs, les nervures 54 des faces externes des parois latérales du corps de l'adaptateur 26 peuvent être espacées d'une paroi à l'autre d'une distance transversale sensiblement égale à la largeur interne de la pièce transversale 28, 28', de façon à ce que la pièce terminale soit calée en direction transversale par coopération de ses jambes avec les parois latérales du corps de l'adaptateur.

On va maintenant décrire le montage de l'adaptateur 26 sur chacune des pièces terminales 28, 28'.

L'adaptateur 26 est engagé dans la pièce terminale 28, 28' en inclinant tout d'abord l'axe longitudinal A de l'adaptateur vis-à-vis de celui de la pièce terminale 28 puis en engageant la patte 41 de la pièce terminale dans l'orifice 51 de l'adaptateur. Lors de cet engagement, les jambes de la pièce terminale commencent par glisser sur les nervures 54 de l'adaptateur. De plus, le bord d'extrémité avant de la paroi supérieure de la pièce terminale vient en appui sur la face 48b de la tête 46 de l'adaptateur. L'extrémité arrière de l'adaptateur est ensuite rapprochée de la pièce terminale jusqu'à ce que les boutons poussoirs latéraux 27' s'engagent par encliquetage élastique dans les encoches 40 de la pièce terminale 28, 28'. Les bords d'extrémité avant des jambes latérales 32a, 32b de la pièce terminale viennent en appui sur les faces 48a de la tête 46 de l'adaptateur. Les axes de l'adaptateur et de la pièce terminale 28 sont alors sensiblement parallèles.

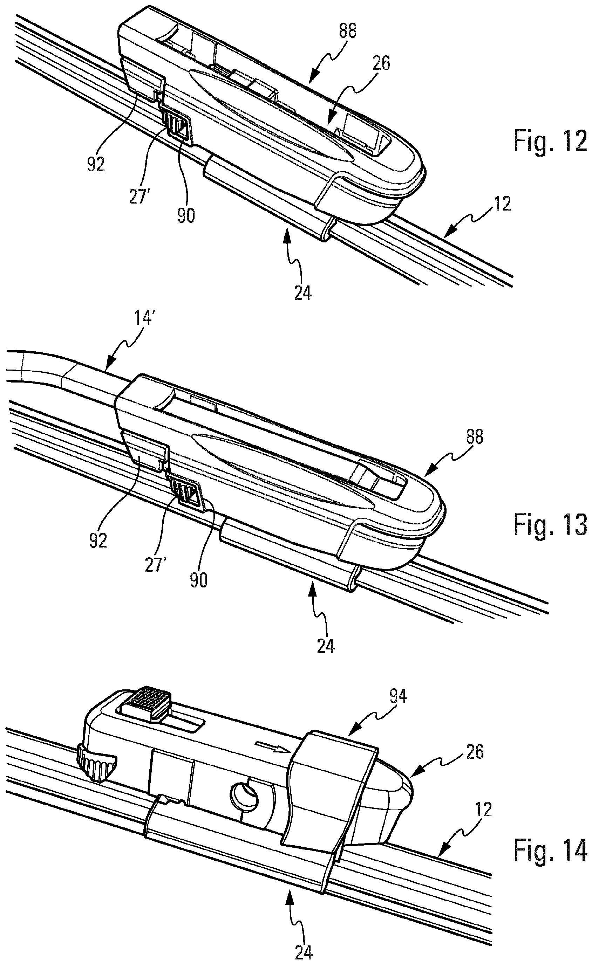

On se réfère maintenant aux figures 12 et 13, dans lesquelles l'adaptateur 26 est relié à un bras d'essuie-glace 14 du type bras tige, c'est-à-dire dépourvu de pièce terminale supplémentaire, par l'intermédiaire d'un premier organe de liaison 88.

Cet organe de liaison 88 est monté sur l'adaptateur 26 et le recouvre intégralement dans l'exemple représenté. Il a une forme longitudinale et comprend un logement interne dans lequel est monté et retenu l'adaptateur. Il comprend à son extrémité arrière des encoches latérales destinées à recevoir par encliquetage élastiques les boutons poussoirs 27', respectivement.

Le bras tige 14' comprend une extrémité engagée dans l'organe de liaison 88, sur sensiblement toute sa longueur, depuis l'extrémité longitudinale arrière de l'organe 88. Le bras tige 14' est solidarisé à l'organe 88 par des moyens appropriés et peut être démonté de l'organe par l'actionnement de boutons poussoirs 92 portés par l'organe et destinés à coopérer avec l'extrémité du bras tige 14'.

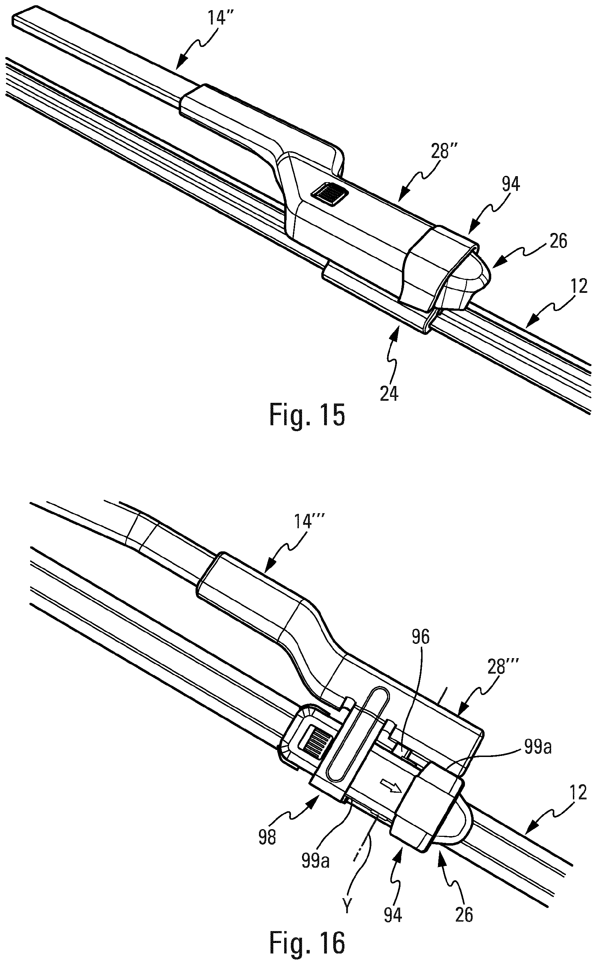

La figure 14 montre un second organe de liaison 94 qui peut être utilisé pour relier l'adaptateur 26 à deux autres types de bras d'essuie-glace, représentés respectivement aux figures 15 et 16.

L'organe de liaison 94 est similaire à l'adaptateur et est destiné à être monté sur l'adaptateur pour le recouvrir au moins en partie. Il est notamment utilisé pour pouvoir équiper un bras d'essuie-glace 14" doté d'une pièce terminale 28" large avec l'adaptateur 26. La pièce terminale 28" du bras d'essuie-glace 14" de la figure 14 diffère de celles des figures 10 et 11 notamment en ce qu'elle a une largeur plus importante. L'organe de liaison 94 est configuré pour rattraper les jeux entre l'adaptateur 26 et la pièce terminale 28", et pour épouser les formes de ces derniers en étant pris en sandwich entre eux. La pièce terminale 28" est similaire à celles des figures 10 et 11.

Le bras d'essuie-glace 14"' de la figure 16 est un bras à verrouillage latéral (de l'anglais side-lock) dont la pièce terminale 28'" comprend d'une part une tige cylindrique, autrement appelé broche 96 s'étendant transversalement sur un côté de la pièce terminale, ainsi qu'un verrou 98 en forme de L qui s'étend transversalement du même côté que la broche 96, parallèlement et à distance de cette dernière.

La deuxième portion 80b de l'orifice 80 sert ici de palier de rotation pour la broche 96 du bras à verrouillage latéral.

La broche 96 est destinée à traverser des orifices latéraux de l'organe 94, qui sont alignés sur l'axe de pivotement Y et donc alignés avec les orifices 56 de l'adaptateur 26 et l'orifice 80 du connecteur 24. La broche 96 est engagée dans ces orifices jusqu'à ce que sa pièce transversale 28"' prennent appui sur une face latérale externe 99a de l'organe 94. La pièce transversale 28"' peut coopérer par glissement avec la face latérale externe 99a lors du pivotement du balai d'essuyage vis-à-vis du bras d'essuie-glace 14'".

Le verrou 98 en L comprend un crochet à son extrémité libre qui est destiné à coopérer par glissement avec une face latérale 99b opposée de l'organe 94 lors du pivotement du balai d'essuyage vis-à-vis du bras d'essuie-glace 14"', et empêche une désolidarisation accidentelle du balai d'essuyage vis-à-vis du bras d'essuie-glace en fonctionnement. Lors du pivotement, la broche 96 peut être guidée par les surfaces cylindriques internes des protubérances 60 voire également la surface cylindrique interne de la partie médiane 80b de l'orifice.

L'adaptateur 26 « universel » peut ainsi être associé à plusieurs types de bras d'entraînement.

## Revendications

1. Organe (24) pour un système de connexion d'un balai d'essuyage (12) à un bras d'essuie-glace (14), comprenant des moyens d'articulation (80) autour d'un axe de pivotement (Y) et configurés pour coopérer avec des moyens (60) complémentaires d'un second organe (26) du système de connexion, organe (24) dans lequel les moyens d'articulation comprennent au moins un orifice (80) comprenant au moins deux portions (80a, 80b) de cylindre de rayons (R₁, R₂) constants et différents, chaque cylindre formant un palier de rotation, organe (24) dans lequel ledit orifice (80) traverse un flanc (76) dudit organe (24), **caractérisé en ce que** ledit flanc (76) est configuré pour être reçu dans un logement (45) dudit second organe et comprend des encoches latérales (82) qui débouchent dans ledit orifice (80) ou sont situés au voisinage de cet orifice (80).

2. Organe (24) selon la revendication 1, dans lequel au moins deux portions (80a, 80b) sont coaxiales.

3. Organe (24) selon la revendication 1 ou 2, dans lequel les moyens d'articulation (80) définissent un axe de rotation entre le balai d'essuyage (12) et le bras d'essuie-glace (14).

4. Organe (24) selon l'une quelconque des revendications précédentes, dans lequel les deux portions (80a, 80b) sont immédiatement adjacentes.

5. Organe (24) selon la revendication 1, dans lequel ledit orifice (80) comporte au moins trois portions (80a, 80b), adjacentes au moins deux à deux et présentant au moins deux rayons (R₁, R₂) différents.

6. Organe (24) selon la revendication 5, dans lequel l'orifice (80) comprend la première portion (80a) de premier rayon (R₁), une troisième portion (80c) de troisième rayon (R₁), et une deuxième portion (80b) de deuxième rayon (R₂), le deuxième rayon (R₂) étant inférieur au premier et/ou troisième rayon (R₁), et la deuxième portion (80b) étant située entre lesdites première et troisième portions (80a, 80c).

7. Organe (24) selon la revendication 6, dans lequel la première portion (80a) et la troisième portion (80c) présentent un rayon (R₁) identique.

8. Organe (24) selon l'une quelconque des revendications 6 ou 7, dans lequel la première portion (80a) et la troisième portions (80c) sont des portions latérales dudit orifice (80) et la deuxième portion (80b) est une portion médiane (80b) dudit orifice (80).

9. Organe (24) selon l'une quelconque des revendications 6 à 8, dans lequel les première et troisième portions (80a, 80c) représentent des portions d'extrémité dudit orifice (80) selon l'axe de pivotement (Y).

10. Organe (24) selon l'une quelconque des revendications 6 à 9, dans lequel chacune desdites première et troisième portions (80a, 80c) a une épaisseur mesurée selon l'axe de pivotement (Y) représentant 5 à 25% de celle dudit orifice (80).

11. Organe (24) selon l'une quelconque des revendications 6 à 10, dans lequel la deuxième portion (80b) a une épaisseur mesurée selon l'axe de pivotement (Y) représentant 50 à 90% de celle dudit orifice (80).

12. Organe (24) selon l'une quelconque des revendications 6 à 11, dans lequel le rapport (R₂/R₁) du deuxième rayon (R₂) sur le premier et/ou troisième rayon (R₁) est compris entre 0,6 et 0,9.

13. Organe (24) selon l'une quelconque des revendications 6 à 12, dans lequel lesdites première et troisième portions (80a, 80c) sont configurées pour recevoir, de préférence par encliquetage élastique, lesdits moyens complémentaires (60) du second organe (26).

14. Organe (24) selon l'une quelconque des revendications 6 à 13, dans lequel chacune desdites première, seconde et troisième portions (80a, 80b, 80c) a une surface cylindrique fermée.

15. Organe (24) selon l'une quelconque des revendications 6 à 14, dans lequel au moins une desdites première et troisième portions (80a, 80c) est reliée à ladite deuxième portion (80b) par une surface annulaire sensiblement radiale par rapport à l'axe de pivotement (Y).

16. Organe (24) selon l'une quelconque des revendications 6 à 15, dans lequel au moins une desdites première et troisième portions (80a, 80c) forme un premier palier de rotation configuré pour recevoir lesdits moyens complémentaires (60) du second organe (26).

17. Organe (24) selon l'une quelconque des revendications 6 à 16, dans lequel la deuxième des portions (80b) forme un deuxième palier de rotation configuré pour recevoir une broche (96) d'une pièce terminale d'un bras d'essuie-glace (14), ladite broche s'étendant selon l'axe de pivotement (Y).

18. Organe (24) selon l'une quelconque des revendications précédentes, dans lequel lesdites encoches (82) sont symétriques par rapport à un premier plan médian (P1) perpendiculaire à l'axe de pivotement (Y), et dans lequel un second plan (P2) perpendiculaire audit premier plan (P1) passe sensiblement par l'axe de pivotement (Y) et au milieu desdites encoches (82).

19. Système de connexion d'un balai d'essuyage (12) à un bras d'essuie-glace (14), ce système comportant deux organes (24, 26) dont l'un est configuré pour être solidarisé audit balai d'essuyage (12) et l'autre est configuré pour être solidarisé audit bras d'essuie-glace (14), **caractérisé en ce qu'**un premier (24) des organes est tel que défini selon l'une des revendications précédentes.

20. Système de connexion selon la revendication 19, dans lequel ledit premier organe est un connecteur (24) configuré être solidarisé audit balai d'essuyage (12).

21. Balai d'essuyage (12), **caractérisé en ce qu'**il comprend ou porte un organe (24) selon l'une des revendications 1 à 18 ou un système selon la revendication 19 ou 20.

## Patentansprüche

1. Organ (24) für ein System zur Verbindung eines Wischerblatts (12) mit einem Scheibenwischerarm (14), umfassend Gelenkverbindungsmittel (80) um eine Schwenkachse (Y), und die ausgelegt sind, mit komplementären Mitteln (60) eines zweiten Organs (26) des Verbindungssystems zusammenzuwirken, wobei in dem Organ (24) die Gelenkverbindungsmittel mindestens eine Öffnung (80) umfassen, umfassend mindestens zwei zylinderförmige Abschnitte (80a, 80b) mit konstanten und unterschiedlichen Radien (R₁, R₂), wobei jeder Zylinder ein Drehlager bildet, wobei in dem Organ (24) die Öffnung (80) eine Flanke (76) des Organs (24) durchquert,
**dadurch gekennzeichnet, dass** die Flanke (76) ausgelegt ist, um in einer Aufnahme (45) des zweiten Organs aufgenommen zu werden, und laterale Kerben (82) umfasst, die in die Öffnung (80) münden oder in der Nähe dieser Öffnung (80) angeordnet sind.

2. Organ (24) nach Anspruch 1, wobei mindestens zwei Abschnitte (80a, 80b) koaxial sind.

3. Organ (24) nach Anspruch 1 oder 2, wobei die Gelenkverbindungsmittel (80) eine Drehachse zwischen dem Wischerblatt (12) und dem Scheibenwischerarm (14) definieren.

4. Organ (24) nach einem der vorhergehenden Ansprüche, wobei die beiden Abschnitte (80a, 80b) unmittelbar benachbart sind.

5. Organ (24) nach Anspruch 1, wobei die Öffnung (80) mindestens drei Abschnitte (80a, 80b) umfasst, die mindestens paarweise benachbart sind und mindestens zwei unterschiedliche Radien (R₁, R₂) aufweisen.

6. Organ (24) nach Anspruch 5, wobei die Öffnung (80) den ersten Abschnitt (80a) mit einem ersten Radius (R₁), einen dritten Abschnitt (80c) mit einem dritten Radius (R₁) und einen zweiten Abschnitt (80b) mit einem zweiten Radius (R₂) umfasst, wobei der zweite Radius (R₂) kleiner ist als der erste und/oder dritte Radius (R₁), und wobei der zweite Abschnitt (80b) zwischen dem ersten und dritten Abschnitt (80a, 80c) angeordnet ist.

7. Organ (24) nach Anspruch 6, wobei der erste Abschnitt (80a) und der dritte Abschnitt (80c) einen identischen Radius (R₁) aufweisen.

8. Organ (24) nach einem der Ansprüche 6 oder 7, wobei der erste Abschnitt (80a) und der dritte Abschnitt (80c) laterale Abschnitte der Öffnung (80) sind, und der zweite Abschnitt (80b) ein mittlerer Abschnitt (80b) der Öffnung (80) ist.

9. Organ (24) nach einem der Ansprüche 6 bis 8, wobei der erste und dritte Abschnitt (80a, 80c) Abschnitte des Endes der Öffnung (80) in der Schwenkachse (Y) darstellen.

10. Organ (24) nach einem der Ansprüche 6 bis 9, wobei jeder von dem ersten und dritten Abschnitt (80a, 80c) eine Dicke, gemessen in der Schwenkachse (Y), aufweist, die 5 bis 25 % jener der Öffnung (80) darstellt.

11. Organ (24) nach einem der Ansprüche 6 bis 10, wobei der zweite Abschnitt (80b) eine Dicke, gemessen in der Schwenkachse (Y), aufweist, die 50 bis 90 % jener der Öffnung (80) darstellt.

12. Organ (24) nach einem der Ansprüche 6 bis 11, wobei das Verhältnis (R₂/R₁) des zweiten Radius (R₂) zu dem ersten und/oder dritten Radius (R₁) zwischen 0,6 und 0,9 beträgt.

13. Organ (24) nach einem der Ansprüche 6 bis 12, wobei der erste und dritte Abschnitt (80a, 80c) ausgelegt sind, um, vorzugsweise durch elastisches Einrasten, die komplementären Mittel (60) des zweiten Organs (26) aufzunehmen.

14. Organ (24) nach einem der Ansprüche 6 bis 13, wobei jeder von dem ersten, zweiten und dritten Abschnitt (80a, 80b, 80c) eine geschlossene zylindrische Fläche aufweist.

15. Organ (24) nach einem der Ansprüche 6 bis 14, wobei mindestens einer von dem ersten und dritten Abschnitt (80a, 80c) mit dem zweiten Abschnitt (80b) durch eine ringförmige Fläche verbunden ist, die im Wesentlichen radial in Bezug auf die Schwenkachse (Y) ist.

16. Organ (24) nach einem der Ansprüche 6 bis 15, wobei mindestens einer von dem ersten und dritten Abschnitt (80a, 80c) ein erstes Drehlager bildet, das ausgelegt ist, um die komplementären Mittel (60) des zweiten Organs (26) aufzunehmen.

17. Organ (24) nach einem der Ansprüche 6 bis 16, wobei der zweite Abschnitt (80b) ein zweites Drehlager bildet, das ausgelegt ist, um einen Stift (96) eines Endstücks eines Scheibenwischerarms (14) aufzunehmen, wobei sich der Stift in der Schwenkachse (Y) erstreckt.

18. Organ (24) nach einem der vorhergehenden Ansprüche, wobei die Kerben (82) symmetrisch in Bezug auf eine erste Mittelebene (P1) rechtwinklig zu der Schwenkachse (Y) sind, und wobei eine zweite Ebene (P2) rechtwinklig zu der ersten Ebene (P1) im Wesentlichen durch die Schwenkachse (Y) und in der Mitte der Kerben (82) hindurchgeht.

19. System zur Verbindung eines Wischerblatts (12) mit einem Scheibenwischerarm (14), wobei dieses System zwei Organe (24, 26) umfasst, von denen das eine ausgelegt ist, um an dem Wischerblatt (12) befestigt zu werden, und das andere ausgelegt ist, um an dem Scheibenwischerarm (14) befestigt zu werden, **dadurch gekennzeichnet, dass** ein erstes (24) der Organe so ist, wie in einem der vorhergehenden Ansprüche definiert.

20. Verbindungssystem nach Anspruch 19, wobei das erste Organ ein Verbinder (24) ist, der ausgelegt ist, um an dem Wischerblatt (12) befestigt zu werden.

21. Wischerblatt (12), **dadurch gekennzeichnet, dass** dieses ein Organ (24) nach einem der Ansprüche 1 bis 18 oder ein System nach Anspruch 19 oder 20 umfasst oder trägt.

## Claims

1. Member (24) for a system for connecting a wiper blade (12) to a windscreen wiper arm (14), comprising means (80) of articulation about an axis (Y) of pivoting and configured in order to interact with complementary means (60) of a second member (26) of the connection system, **characterised in that** the articulation means comprise at least one hole (80) comprising at least two portions (80a, 80b) of a cylinder having radii (R₁, R₂), which are constant and different, each cylinder forming a rotation bearing, member (24) in which said hole (80) transverses a flank (76) of said member (24), **characterized in that** said flank (76) is configured in order to be received in a housing (45) of said second member (26) and comprises lateral notches (82) that open out in said hole (80) or are located in the vicinity of this hole (80)

2. Member (24) according to Claim 1, wherein at least two portions (80a, 80b) are coaxial.

3. Member (24) according to Claim 1 or 2, wherein the articulation means (80) define an axis of rotation between the wiper blade (12) and the windscreen wiper arm (14).

4. Member (24) according to any one of the preceding claims, wherein the two portions (80a, 80b) are immediately adjacent.

5. Member (24) according to Claim 1, wherein said hole (80) comprises at least three portions (80a, 80b), which are adjacent at least in pairs and having at least two different radii (R₁, R₂).

6. Member (24) according to Claim 5, wherein the hole (80) comprises the first portion (80a) of first radius (R₁), a third portion (80c) of third radius (R₁), and a second portion (80b) of second radius (R₂), the second radius (R₂) being smaller than the first and/or third radius (R₁), and the second portion (80b) being located between said first and third portions (80a, 80c).

7. Member (24) according to Claim 6, wherein the first portion (80a) and the third portion (80c) have an identical radius (R₁).

8. Member (24) according to either of Claims 6 and 7, wherein the first portion (80a) and the third portion (80c) are lateral portions of said hole (80) and the second portion (80b) is a median portion (80b) of said hole (80).

9. Member (24) according to any one of Claims 6 to 8, wherein the first and third portions (80a, 80c) represent end portions of said hole (80) in accordance with the axis (Y) of pivoting.

10. Member (24) according to any one of Claims 6 to 9, wherein each of said first and third portions (80a, 80c) has a thickness measured in accordance with the axis (Y) of pivoting representing 5 to 25% of that of said hole (80).

11. Member (24) according to any one of Claims 6 to 10, wherein the second portion (80b) has a thickness measured in accordance with the axis (Y) of pivoting representing 50 to 90% of that of said hole (80).

12. Member (24) according to any one of Claims 6 to 11, wherein the ratio (R₂/R₁) of the second radius (R₂) to the first and/or third radius (R₁) is between 0.6 and 0.9.

13. Member (24) according to any one of Claims 6 to 12, wherein said first and third portions (80a, 80c) are configured in order to receive, preferably by elastic snap-fitting, said complementary means (60) of the second member (26).

14. Member (24) according to any one of Claims 6 to 13, wherein each of said first, second and third portions (80a, 80b, 80c) has a closed cylindrical surface.

15. Member (24) according to any one of Claims 6 to 14, wherein at least one of said first and third portions (80a, 80c) is connected to said second portion (80b) by an annular surface that is substantially radial relative to the axis (Y) of pivoting.

16. Member (24) according to any one of Claims 6 to 15, wherein at least one of said first and third portions (80a, 80c) forms a first rotation bearing configured in order to receive said complementary means (60) of the second member (26).

17. Member (24) according to any one of Claims 6 to 16, wherein the second (80b) of the portions forms a second rotation bearing configured in order to receive a spindle (96) of a terminal piece of a windscreen wiper arm (14), said spindle extending in accordance with the axis (Y) of pivoting.

18. Member (24) according to any one of the preceding claims, wherein said notches (82) are symmetrical relative to a first median plane (P1) perpendicular to the axis (Y) of pivoting, and wherein a second plane (P2) perpendicular to said first plane (P1) passes substantially via the axis (Y) of pivoting and in the middle of said notches (82).

19. System for connecting a wiper blade (12) to a windscreen wiper arm (14), this system comprising two members (24, 26), one of which is configured in order to be secured to said wiper blade (12) and the other is configured in order to be secured to said windscreen wiper arm (14), **characterised in that** a first (24) of the members is such as defined according to one of the preceding claims.

20. Connection system according to Claim 19, wherein said first member is a connector (24) configured in order to be secured to said wiper blade (12).

21. Wiper blade (12), **characterised in that** it comprises or carries a member (24) according to one of Claims 1 to 18 or a system according to Claim 19 or 20.
